# EUROPÄISCHE PATENTSCHRIFT

(11) **EP 3 649 769 B1**
(45) Veröffentlichungstag und Bekanntmachung des Hinweises auf die Patenterteilung: **01.05.2024**
(21) Anmeldenummer: 18753117.3
(22) Anmeldetag: 02.08.2018
(51) Int. Cl.: H04L 12/12, H04L 67/12, H04L 12/40, H04L 12/10, B60R 16/023

(54) **VERFAHREN ZUM BETREIBEN EINES DATENNETZWERKS EINES FAHRZEUGS SOWIE FAHRZEUG MIT EINEM DATENNETZWERK**
METHOD FOR OPERATING A DATA NETWORK OF A VEHICLE, AND VEHICLE HAVING A DATA NETWORK
PROCÉDÉ D'EXPLOITATION D'UN RÉSEAU DE DONNÉES D'UN VÉHICULE ET VÉHICULE POURVU D'UN RÉSEAU DE DONNÉES

(30) Priorität: 01.09.2017 DE 102017215317
(43) Veröffentlichungstag der Anmeldung: 13.05.2020
(73) Patentinhaber: Siemens Mobility GmbH, 81739 München (DE)
(72) Erfinder: BRAUN, Thorsten, 91088 Bubenreuth (DE)
(74) Vertreter: Siemens Patent Attorneys
(86) Internationale Anmeldenummer: PCT/EP2018/070958
(87) Internationale Veröffentlichungsnummer: WO 2019/042697

(56) Entgegenhaltungen:
- EP-A1- 2 388 951
- WO-A2-2010/112173
- DE-A1-102010 008 818
- DE-A1-102010 011 655
- US-A1- 2015 200 712
- Anonymous: "Cisco Connected Rail: Meeting New Transportation Demands Solution Overview", , 1 September 2016 (2016-09-01), pages 1-12, XP055851674, Retrieved from the Internet: URL:https://www.cisco.com/c/dam/en_us/solu tions/industries/docs/cts.pdf [retrieved on 2021-10-15]

## Beschreibung

Die Erfindung betrifft ein Verfahren zum Betreiben eines Datennetzwerks eines Fahrzeugs gemäß dem Oberbegriff des Anspruchs 1 sowie ein Fahrzeug gemäß dem Oberbegriff des Anspruchs 10.

Es gibt Zustände eines Fahrzeugs, in denen bestimmte Elektrogeräte oder bestimmte Gruppen von Elektrogeräten des Fahrzeugs nicht benötigt werden. Befindet sich das Fahrzeug in einem solchen Zustand, können diese Elektrogeräte bzw. Gerätegruppen abgeschaltet werden, um elektrische Energie zu sparen.

Ferner kann ein Elektrogerät eines Fahrzeugs, das Teil eines Datennetzwerks des Fahrzeugs ist und an einen Netzwerkknoten des Datennetzwerks angeschlossen ist, über den Netzwerkknoten mit elektrischer Energie versorgt werden - sofern das Elektrogerät dazu geeignet ist.

Ein Netzwerkknoten und ein an den Netzwerkknoten angeschlossenes Elektrogerät, das über den Netzwerkknoten mit elektrischer Energie versorgt wird, können unterschiedlichen Gerätegruppen angehören. Das heißt, es kann vorgesehen sein, dass der Netzwerkknoten bei einem anderen Fahrzeugzustand abgeschaltet wird als das an den Netzwerkknoten angeschlossene Elektrogerät.

So kann es insbesondere einen Fahrzeugzustand geben, in dem das an den Netzwerkknoten angeschlossene Elektrogerät nicht benötigt wird und daher grundsätzlich abgeschaltet werden könnte, jedoch der Netzwerkknoten angeschaltet bleiben soll, zum Beispiel weil andere an den Netzwerkknoten angeschlossene Elektrogeräte über den Netzwerkknoten Daten senden und/oder empfangen können sollen und/oder über den Netzwerkknoten mit elektrischer Energie versorgt werden sollen. In solch einem Fall ist ein Abschalten des Netzwerkknotens zum Zwecke einer Abschaltung des nicht benötigten Elektrogeräts in diesem Fahrzeugzustand unzulässig.

EP 2 388 951 A1 beschreibt ein Kommunikationsnetzwerk mit einer Vielzahl von Knoten. Jeder Knoten umfasst ein Netzwerkgerät und eine Netzwerkschnittstelle. Wenigstens einer der Knoten weist einen dazugehörigen lokalen Power-Manager zum Steuern der Energie des Netzwerkgeräts. Das Kommunikationsnetzwerk ist in einem Fahrzeug installiert.

DE 10 2010 008 818 A1 beschreibt ein Verfahren zur Aktivierung mindestens einer temporär inaktiven Netzwerk-Komponente eines Netzwerk-Systems für ein Fahrzeug. Eine zentrale Netzwerkeinrichtung des Netzwerk-Systems ist über einen Pfad innerhalb des Netzwerk-Systems mit der Netzwerk-Komponente signaltechnisch verbunden. Der Pfad führt zumindest teilweise über ein Netzwerk-Segment des Netzwerk-Systems, wobei das Netzwerk-Segment die Netzwerk-Komponente und eine ihr zugeordneten erste Aktivierungseinrichtung unverzweigt mit einer im Pfad angeordneten Switch-Einrichtung und einer ihr zugeordneten zweiten Aktivierungseinrichtung signaltechnisch verbindet. Die zentrale Netzwerkeinrichtung spricht die erste Aktivierungseinrichtung mittels der Switch-Einrichtung durch Senden eines Netzwerkfunktions-Kontrollsignals an.

Eine Aufgabe der Erfindung ist es, ein Verfahren anzugeben, welches einen energiesparenden Betrieb eines Fahrzeugs ermöglicht.

Diese Aufgabe wird erfindungsgemäß gelöst durch ein Verfahren nach Anspruch 1.

Eine weitere Aufgabe der Erfindung ist es, ein Fahrzeug bereitzustellen, welches energiesparend betrieben werden kann.

Diese Aufgabe wird erfindungsgemäß gelöst durch ein Fahrzeug nach Anspruch 10.

Vorteilhafte Weiterbildungen des erfindungsgemäßen Verfahrens sowie des erfindungsgemäßen Fahrzeugs sind jeweils Gegenstand der weiteren Patentansprüche sowie der nachfolgenden Beschreibung.

Bei dem erfindungsgemäßen Verfahren zum Betreiben eines Datennetzwerks eines Fahrzeugs weist das Datennetzwerk einen Netzwerkknoten, ein Elektrogerät, das an einen Port des Netzwerkknotens angeschlossen ist und über diesen Port mit elektrischer Energie versorgbar ist, sowie eine mit dem Netzwercknoten verbundene Datenverarbeitungseinrichtung zum Steuern des Netzwerkknotens auf. Von der Datenverarbeitungseinrichtung wird gemäß einer vorgegebenen, fahrzeugzustandsabhängigen Ein-/Abschaltvorschrift ein Steuerbefehl zum Ein- oder Abschalten des Ports an den Netzwerkknoten übermittelt. Ferner wird vom Netzwerkknoten der Port gemäß dem übermittelten Steuerbefehl ein- oder abgeschaltet.

Das erfindungsgemäße Fahrzeug weist ein Datennetzwerk mit einem Netzwerkknoten, einem Elektrogerät, das an einen Port des Netzwerkknotens angeschlossen ist und über diesen Port mit elektrischer Energie versorgbar ist, sowie einer mit dem Netzwerkknoten verbundenen Datenverarbeitungseinrichtung zum Steuern des Netzwerkknotens auf. Die Datenverarbeitungseinrichtung ist dazu eingerichtet, gemäß einer vorgegebenen, fahrzeugzustandsabhängigen Ein-/Abschaltvorschrift einen Steuerbefehl zum Ein- oder Abschalten des Ports an den Netzwerkknoten zu übermitteln. Des Weiteren ist der Netzwerkknoten dazu eingerichtet, gemäß dem übermittelten Steuerbefehl den Port des Netzwerkknotens ein- oder abzuschalten.

Das im Zusammenhang mit dem erfindungsgemäßen Verfahren erwähnte Fahrzeug ist vorzugsweise das erfindungsgemäße Fahrzeug.

Durch Abschalten des Ports, an den das Elektrogerät angeschlossen ist, kann eine Abschaltung des Elektrogeräts bewirkt werden, ohne dass zur Abschaltung des Elektrogeräts der Netzwerkknoten als Ganzes abgeschaltet werden muss. Wird das Elektrogerät in einem bestimmten Fahrzeugzustand nicht benötigt, kann das Elektrogerät durch Abschalten des Ports abgeschaltet werden, wodurch Energie gespart werden kann. Das Elektrogerät muss nicht notwendigerweise eingeschaltet bleiben, wenn der Netzwerkknoten in diesem Fahrzeugzustand in Betrieb bleiben soll. Der Netzwerkknoten kann eingeschaltet bleiben, sodass beispielsweise ein oder mehrere andere Ports des Netzwerkknotens zur Datenübertragung und/oder zur Versorgung eines oder mehrerer weiterer Elektrogeräte mit elektrischer Energie genutzt werden kann/können. Während der erstgenannte Port ausgeschaltet ist, kann also beispielsweise über einen anderen Port des Netzwerkknotens ein an diesen anderen Port angeschlossenes weiteres Elektrogerät mit elektrischer Energie versorgt werden. Bei Bedarf kann durch Einschalten des erstgenannten Ports bewirkt werden, dass das an diesen Port angeschlossene Elektrogerät wieder in seinen eingeschalteten Zustand zurückkehrt.

Falls das Datennetzwerk - oder zumindest der Netzwerkknoten des Datennetzwerks - über eine Fahrzeugbatterie mit elektrischer Energie versorgt wird, kann in einem Fahrzeugzustand, in welchem das Elektrogerät nicht benötigt wird, durch Abschalten des Ports eine Entladung der Fahrzeugbatterie reduziert werden.

Die Erfindung ermöglicht ein flexibles Energiemanagement. Durch eine Änderung der Ein-/Abschaltvorschrift kann das Ein- /Abschaltverhalten des Netzwerkknotens verändert werden, ohne die Verkabelung des Datennetzwerks ändern zu müssen. Mit anderen Worten, durch eine Anpassung der Ein-/Abschaltvorschrift kann - bei gleichbleibender Verkabelung des Datennetzwerks - verändert werden, bei welchen Fahrzeugzuständen der Port des Netzwerkknotens eingeschaltet wird bzw. bei welchen Fahrzeugzuständen der Port ausgeschaltet wird.

Insbesondere ermöglicht die Erfindung für jeden Port des Netzwerkknotens individuell festzulegen, bei welchen Fahrzeugzuständen der jeweilige Port des Netzwerkknotens ein- bzw. ausgeschaltet wird. Dies ermöglicht ein individuelles Ein-/Abschalten von an den Netzwerkknoten angeschlossenen Elektrogeräten.

Unter einem Port (auch Schnittstelle genannt) ist vorliegend eine Anschlussbuchse zum Anschließen eines Geräts zu verstehen.

Die Formulierung, dass der Port des Netzwerkknotens "gemäß dem übermittelten Steuerbefehl ein- oder ausgeschaltet wird", ist dahingehend zu verstehen, dass der Port abgeschaltet wird, falls der Steuerbefehl ein Befehl zum Abschalten des Ports ist, und der Port eingeschaltet wird, falls der Steuerbefehl ein Befehl zum Einschalten des Ports ist.

Vorzugsweise definiert die Ein-/Abschaltvorschrift, bei welchen Zuständen des Fahrzeugs der Port des Netzwerkknotens eingeschaltet sein soll und bei welchen Zuständen des Fahrzeugs der Port abgeschaltet sein soll.

Weiter ist es vorteilhaft, wenn die Ein-/Abschaltvorschrift editierbar ist, insbesondere über eine mit der Datenverarbeitungseinrichtung verbindbare bzw. verbundene Bedieneinheit. Dadurch kann in aufwandsgünstiger Weise eine Veränderung an der Ein-/Abschaltvorschrift vorgenommen werden, um neu zu definieren, bei welchen Zuständen des Fahrzeugs der Port des Netzwerkknotens eingeschaltet sein soll und bei welchen Zuständen des Fahrzeugs der Port abgeschaltet sein soll.

Ein Abschalten des Ports umfasst zweckmäßigerweise ein Unterbrechen einer Spannungsversorgung des Ports. Ein Einschalten des Ports umfasst zweckmäßigerweise ein Wiederaufnehmen der Spannungsversorgung des Ports.

In der Datenverarbeitungseinrichtung ist zweckmäßigerweise ein Computerprogramm hinterlegt, welches auf der Datenverarbeitungseinrichtung ausführbar ist bzw. ausgeführt wird. Die Ein-/Abschaltvorschrift ist vorteilhafterweise in diesem Computerprogramm implementiert. In bevorzugter Weise ist die Datenverarbeitungseinrichtung durch dieses Computerprogramm dazu eingerichtet, gemäß der Ein-/Abschaltvorschrift einen Steuerbefehl zum Ein- oder Abschalten des Ports an den Netzwerkknoten zu übermitteln.

Die Datenverarbeitungseinrichtung kann eine Rechnereinheit, insbesondere einen Server, oder mehrere kommunikativ miteinander verbundene Rechnereinheiten umfassen.

Weiter ist es zweckmäßig, wenn im Netzwerkknoten eine Software zur Auswertung des übermittelten Steuerbefehls hinterlegt ist. Vorzugsweise ist der Netzwerkknoten durch diese Software dazu eingerichtet, gemäß dem übermittelten Steuerbefehl den Port des Netzwerkknotens ein- oder abzuschalten.

Das Fahrzeug kann insbesondere als Schienenfahrzeug ausgebildet sein.

Des Weiteren ist das Datennetzwerk vorzugsweise ein Ethernet-Netzwerk. Weiter ist es vorteilhaft, wenn das Elektrogerät ein Power-over-Ethernet-fähiges Gerät ist.

Der Netzwerkknoten des Datennetzwerks kann beispielsweise ein Switch, insbesondere ein Ethernet-Switch, sein.

Vorteilhafterweise wird ein Zustand des Fahrzeugs überwacht, insbesondere mittels einer oder mehrerer Überwachungsvorrichtungen des Fahrzeugs. Hierbei werden vorzugsweise Fahrzeugzustandsdaten erzeugt. Zweckmäßigerweise wird der Steuerbefehl von der Datenverarbeitungseinrichtung in Abhängigkeit der Fahrzeugzustandsdaten erzeugt.

In bevorzugter Weise wird der Steuerbefehl bei einer Zustandsänderung des Fahrzeugs - also wenn sich der Fahrzeugzustand ändert - an den Netzwerkknoten übermittelt.

Es kann beispielsweise vorgesehen sein, dass der Port des Netzwerkknotens gemäß der Ein-/Abschaltvorschrift abgeschaltet wird, wenn das Fahrzeug abgestellt wird. Dies ermöglicht einen energiesparenden Abstellbetrieb des Fahrzeugs.

Im Falle einer Ausgestaltung des Fahrzeugs als Schienenfahrzeug kann insbesondere vorgesehen sein, dass der Port des Netzwerkknotens gemäß der Ein-/Abschaltvorschrift abgeschaltet wird, wenn das Fahrzeug abgerüstet abgestellt wird - also wenn, das Fahrzeug derart abgestellt wird, dass sein Stromabnehmer keinen Kontakt zu einer Fahrleitung aufweist.

Im eingeschalteten Zustand des Ports des Netzwerkknotens wird das Elektrogerät vorteilhafterweise über den Port mit elektrischer Energie versorgt, insbesondere gemäß dem Standard IEEE 802.3af oder dem Standard IEEE802.3at. Im ausgeschalteten Zustand des Ports hingegen ist ein elektrischer Energiefluss zum Elektrogerät vorzugsweise unterbrochen.

In bevorzugter Weise bewirkt ein Abschalten des Ports des Netzwerkknotens, dass das an den Port angeschlossene Elektrogerät abgeschaltet wird. Ein Einschalten des Ports bewirkt vorzugsweise, dass das besagte Elektrogerät eingeschaltet wird.

Besonders bevorzugt ist es, wenn das Elektrogerät im Betrieb allein über den Port des Netzwerkknotens mit elektrischer Energie versorgt wird. Auf diese Weise kann auf eine zusätzliche Energiequelle zur Versorgung des Elektrogeräts mit elektrischer Energie verzichtet werden.

Vorteilhafterweise wird von der Datenverarbeitungseinrichtung als Netzwerkprotokoll zur Steuerung des Netzwerkknotens das sogenannte Simple Network Management Protocol (SNMP), insbesondere Version 3 des Simple Network Management Protocols, verwendet. Dieses Netzwerkprotokoll ermöglicht eine sichere Kommunikation zwischen der Datenverarbeitungseinrichtung und dem Netzwerkknoten, insbesondere durch Datenverschlüsselung und Teilnehmerauthentifizierung.

Weiter kann vorgesehen sein, dass nach erfolgtem Ein-/Abschalten des Ports vom Netzwerkknoten eine Bestätigungsmeldung über das Ein-/Abschalten des Ports an die Datenverarbeitungseinrichtung übermittelt wird. Zur Übermittlung der Bestätigungsmeldung wird vorzugsweise das zuvor erwähnte Netzwerkprotokoll verwendet. Insbesondere kann die Bestätigungsmeldung als sogenannte SNMP Trap Message übermittelt werden.

Erfindungsgemäß wird von der Datenverarbeitungseinrichtung ein Diagnosesystem des Fahrzeugs bei einer von der Datenverarbeitungseinrichtung initiierten Abschaltung des Ports - also bei einer gewünschten Abschaltung des Ports - dahingehend beeinflusst, dass das Diagnosesystem keine Fehlermeldung erzeugt, die darauf beruht, dass das Elektrogerät abgeschaltet bzw. nicht erreichbar ist.

Erfindungsgemäß umfasst das Datennetzwerk mehrere Elektrogeräte. Das zuvor erwähnte Elektrogerät kann insbesondere eins dieser mehreren Elektrogeräte sein.

Erfindungsgemäß sind die Elektrogeräte an unterschiedliche Ports des Netzwerkknotens angeschlossen. Der Steuerbefehl ist ein Befehl zum Ein- oder Abschalten mehrerer dieser Ports. Dabei werden vom Netzwerkknoten diejenigen seiner Ports, auf die sich der Steuerbefehl bezieht, ein- oder abgeschaltet.

Jeder Port des Netzwerkknotens hat vorzugsweise eine dem Port eindeutig zuordenbare Kennung. Der Steuerbefehl kann unter anderem die Kennungen der ein-/abzuschaltenden Ports des Netzwerkknotens aufweisen.

Vorzugweise definiert die Ein-/Abschaltvorschrift, bei welchen Fahrzeugzuständen welcher Port des Netzwerkknotens eingeschaltet sein soll und bei welchen Fahrzeugzuständen welcher Port des Netzwerkknotens abgeschaltet sein soll. Insbesondere kann die Ein-/Abschaltvorschrift - bezogen auf unterschiedliche Fahrzeugzustände - eine Reihenfolge definieren, in welcher die Elektrogeräte des Datennetzwerkes ein-/abgeschaltet werden sollen.

In der Datenverarbeitungseinrichtung ist vorteilhafterweise eine Zuordnung hinterlegt, in welcher eindeutig definiert ist, welches der Elektrogeräte an welchen Port des Netzwercknotens angeschlossen ist. Die Ein-/Abschaltvorschrift basiert vorzugsweise auf dieser Zuordnung. Anders ausgedrückt, der Steuerbefehl wird vorzugsweise in Abhängigkeit dieser Zuordnung erzeugt.

Vorteilhafterweise ist das jeweilige Elektrogerät über denjenigen Port, an den es angeschlossen ist, mit elektrischer Energie versorgbar.

Mehrere dieser Elektrogeräte können eine Gerätegruppe bilden. In bevorzugter Weise werden diejenigen Ports des Netzwerkknotens, an welche die Elektrogeräte dieser Gerätegruppe angeschlossen sind, gemeinsam ein-/abgeschaltet. Der weiter oben erwähnte Steuerbefehl kann insbesondere ein Befehl zum Ein- oder Abschalten derjenigen Ports sein, an welche die Elektrogeräte der Gerätegruppe angeschlossen sind.

Weiterhin kann vorgesehen sein, dass die an die Ports des Netzwerkknotens angeschlossenen Elektrogeräte mehrere Gerätegruppen bilden.

Weiter ist es vorteilhaft, wenn in der Datenverarbeitungseinrichtung eine Zuordnung hinterlegt ist, in welcher eindeutig definiert ist, zu welcher Gerätegruppe, das jeweilige Elektrogerät gehört. Die Ein-/Abschaltvorschrift basiert vorzugsweise auf dieser Zuordnung. Mit anderen Worten, der Steuerbefehl wird vorzugsweise in Abhängigkeit dieser Zuordnung erzeugt. Weiter ist es vorteilhaft, wenn diese Zuordnung editierbar ist, sodass beispielsweise ein Elektrogerät einer bestimmten Gerätegruppe einer anderen Gerätegruppe zugeordnet werden kann, mehrere Gerätegruppen zusammengefasst werden können und/oder eine Gerätegruppe in mehrere Gerätegruppen aufgeteilt werden kann.

Das jeweilige Elektrogerät kann zum Beispiel ein Sensor für ein Fahrgastzählsystem, eine Kamera für ein Videoüberwachungssystem, ein WLAN Access Point für ein Fahrgastnetzwerk oder eine Informationsausgabevorrichtung für ein Fahrgastinformationssystem sein. Eine Informationsausgabevorrichtung kann beispielsweise ein Lautsprecher für fahrgastrelevante Durchsagen oder ein Display, insbesondere ein in einen Fahrgastsitz integriertes Display, sein.

Beispielsweise kann das jeweilige Elektrogerät zudem ein WLAN Access Point für ein Fahrgastnetzwerk sein.

Besagte Systeme - also das Fahrgastzählsystem, das Videoüberwachungssystem, das Fahrgastnetzwerk und das Fahrgastinformationssystem - sind zweckmäßigerweise Elemente des Fahrzeugs.

Bei einem oder mehreren der Elektrogeräte kann es sich jeweils um einen weiteren Netzwerkknoten, insbesondere einen Switch, handeln. An einen oder mehrere Ports eines solchen weiteren Netzwerkknotens kann jeweils ein weiteres Elektrogerät angeschlossen sein.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Fahrzeug kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

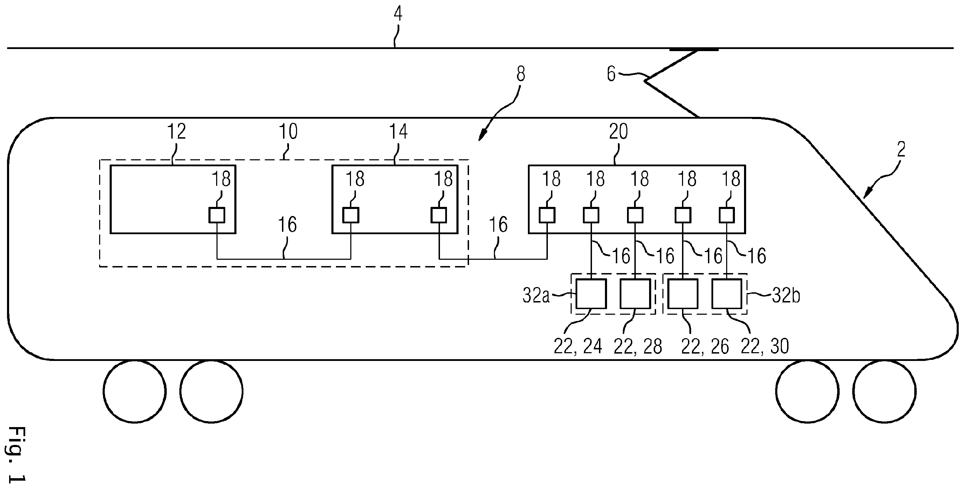

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels der Erfindung, das im Zusammenhang mit der Figur näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Die einzige Figur zeigt schematisch ein Schienenfahrzeug 2 sowie eine Fahrleitung 4 zur Versorgung des Schienenfahrzeugs 2 mit elektrischer Energie.

Das Schienenfahrzeug 2 ist mit einem Stromabnehmer 6 ausgestattet, über welchen das Schienenfahrzeug 2 elektrische Energie aus der Fahrleitung 4 beziehen kann. Des Weiteren weist das Schienenfahrzeug 2 ein Datennetzwerk 8 auf, bei dem es sich im vorliegenden Ausführungsbeispiel um ein Ethernet-Netzwerk handelt.

Das Datennetzwerk 8 umfasst eine Datenverarbeitungseinrichtung 10, welche ihrerseits ein Fahrzeugsteuerungssystem 12 (Train Control System) sowie einen Server 14 (Train Server) umfasst. Das Fahrzeugsteuerungssystem 12 der Datenverarbeitungseinrichtung 10 ist über eine Datenleitung 16, welche an einen Port 18 des Fahrzeugsteuerungssystem 12 sowie an einen ersten Port 18 des Servers 14 angeschlossen ist, mit dem Server 14 verbunden.

Außerdem weist das Datennetzwerk 8 einen Netzwerkknoten 20 auf, bei welchem es sich im vorliegenden Ausführungsbeispiel um einen Ethernet-Switch handelt. Dieser Netzwerkknoten 20 weist exemplarisch fünf Ports 18 auf. Grundsätzlich kann der Netzwerkknoten 20 eine höhere oder eine geringere Anzahl von Ports 18 aufweisen.

Der Netzwerkknoten 20 ist über eine andere Datenleitung 16, welche an einen der Ports 18 des Netzwerkknotens 20 sowie an einen zweiten Port 18 des Servers 14 angeschlossen ist, mit dem Server 14 der Datenverarbeitungseinrichtung 10 verbunden.

Darüber hinaus weist das Datennetzwerk 8 mehrere Elektrogeräte 22 auf, die jeweils über eine weitere Datenleitung 16 mit einem der anderen Ports 18 des Netzwerkknotens 20 verbunden sind, wobei jedem der Elektrogeräte 22 genau ein Port 18 des Netzwerkknotens 20 zugeordnet ist.

Besagte Elektrogeräte 22 sind Power-over-Ethernet-fähige Geräte, wobei das jeweilige Elektrogerät 22 im Betrieb allein über denjenigen Port 18 des Netzwerkknotens 20, an den das Elektrogerät 22 angeschlossen ist, mit elektrischer Energie versorgt wird.

Bei einem dieser Elektrogeräte 22 handelt es sich beispielsweise um einen Fahrgastzählsensor 24, während es sich bei den anderen Elektrogeräten 22 exemplarisch um eine Videoüberwachungskamera 26, einen WLAN Access Point 28 für ein Fahrgastnetzwerk und eine Informationsausgabevorrichtung 30 für ein Fahrgastinformationssystem handelt.

Des Weiteren bilden die Elektrogeräte 22 mehrere Gerätegruppen. Im vorliegenden Ausführungsbeispiel weist das Datennetzwerk 8 eine erste Gerätegruppe 32a mit zwei Elektrogeräten 22 sowie eine zweite Gerätegruppe 32b mit zwei Elektrogeräten 22 auf.

Die zuvor erwähnten Datenleitungen 16, welche die jeweiligen Komponenten des Datennetzwerks 8 miteinander verbinden, sind jeweils als Ethernet-Kabel ausgebildet.

Außer den zuvor genannten Komponenten kann das Datennetzwerk 8 eine oder mehrere weitere, figürlich nicht dargestellte Komponenten, wie zum Beispiel einen oder mehrere weitere Netzwerkknoten, aufweisen. Auf solche etwaige weitere Komponenten des Datennetzwerks 8 wird der Einfachheit halber nicht eingegangen.

In der Datenverarbeitungseinrichtung 10, insbesondere in deren Server 14, ist eine Software zum Steuern des Netzwerkknotens 20 hinterlegt. Zur Kommunikation mit dem Netzwerkknoten 20 nutzt der Server 14 das sogenannte Simple Network Management Protocol, genauer gesagt Version 3 dieses Protokolls.

Das zuvor erwähnte Fahrzeugsteuerungssystem 12 überwacht den Zustand des Schienenfahrzeugs 2, beispielsweise mithilfe figürlich nicht dargestellter Überwachungsvorrichtungen. Hierbei werden Fahrzeugzustandsdaten erzeugt und von dem Fahrzeugsteuerungssystem 12 an den Server 14 übermittelt. Die Fahrzeugzustandsdaten umfassen unter anderem Informationen darüber, welche Ports 18 des Netzwerkknotens 20 eingeschaltet und welche Ports 18 des Netzwerkknotens 20 ausgeschaltet sind.

Im Server 14 ist hinterlegt, welches der Elektrogeräte 22 des Datennetzwerkes 8 an welchen Port 18 des Netzwerkknotens 20 angeschlossen ist. Zudem ist im Server 14 hinterlegt, welche der Elektrogeräte 22 eine gemeinsame Gerätegruppe 32a, 32b bilden.

In Abhängigkeit des anhand der Fahrzeugzustandsdaten ermittelten Zustands des Schienenfahrzeugs 2 erzeugt der Server 14 gemäß einer vorgegebenen Ein-/Abschaltvorschrift, welche in besagter Software implementiert ist, einen Steuerbefehl zum Ein- oder Abschalten von Ports 18 des Netzwerkknotens 20 und übermittelt den Steuerbefehl an den Netzwerkknoten 20. Der Steuerbefehl wird insbesondere bei einer Zustandsänderung des Schienenfahrzeugs 2 erzeugt und an den Netzwerkknoten 20 übermittelt. Zum Beispiel kann der Steuerbefehl erzeugt und an den Netzwerkknoten 20 übermittelt werden, falls ein Schienenfahrzeugführer über ein Bedienelement des Schienenfahrzeugs 2 ein Ereignis auslöst, durch welches der Zustand des Schienenfahrzeugs 2 geändert wird.

Der vom Server 14 erzeugte und an den Netzwerkknoten 20 übermittelte Steuerbefehl enthält die Kennungen der ein-/abzuschaltenden Ports 18 des Netzwerkknotens 20. Diejenigen Ports 18 des Netzwerkknotens 20, deren Kennungen im Steuerbefehl enthalten sind, werden vom Netzwerkknoten 20 gemäß dem Steuerbefehl ein-/abgeschaltet.

Im eingeschalteten Zustand des jeweiligen Ports 18 des Netzwerkknotens 20 wird das an den Port 18 angeschlossene Elektrogerät 22 über den Port 18 mit elektrischer Energie versorgt. Im ausgeschalteten Zustand des jeweiligen Ports 18 des Netzwerkknotens 20 hingegen ist ein elektrischer Energiefluss zum Elektrogerät 22 unterbrochen. Ein Abschalten eines Ports 18 des Netzwerkknotens 20 bewirkt, dass das an den Port 18 angeschlossene Elektrogerät 22 außer Betrieb gesetzt wird. Umgekehrt bewirkt ein Einschalten eines Ports 18 des Netzwerkknotens 20, dass das an den Port 18 angeschlossene Elektrogerät 22 in Betrieb gesetzt wird.

Vorliegend wird der Netzwerkknoten 20 vom Server 14 derart gesteuert, dass diejenigen Ports 18 des Netzwerkknotens 20, an welche Elektrogeräte 22 derselben Gerätegruppe 32a, 32b angeschlossen sind, gemeinsam ein-/abgeschaltet werden.

Nach erfolgtem Ein-/Abschalten der jeweiligen Ports 18 wird vom Netzwerkknoten 20 eine Bestätigungsmeldung über das Ein-/Abschalten der Ports 18 erzeugt und die Bestätigungsmeldung an den Server 14 übermittelt.

Die Ein-/Abschaltvorschrift sieht vor, dass bei einer Zustandsänderung des Schienenfahrzeugs 2 von einem ersten Fahrzeugzustand in einen zweiten Fahrzeugzustand diejenigen Ports 18 des Netzwerkknotens 20, an welche die Elektrogeräte 22 der ersten Gerätegruppe 32a angeschlossen sind, abgeschaltet werden, wohingegen diejenigen Ports 18 des Netzwerkknotens 20, an welche die Elektrogeräte 22 der zweiten Gerätegruppe 32b angeschlossen sind, eingeschaltet bleiben.

Weiter sieht die Ein-/Abschaltvorschrift vor, dass bei einer Zustandsänderung des Schienenfahrzeugs 2 vom zweiten Fahrzeugzustand in einen dritten Fahrzeugzustand zusätzlich zu den bereits abgeschalteten Ports 18 des Netzwerkknotens 20, an welche die Elektrogeräte 22 der ersten Gerätegruppe 32a angeschlossen sind, auch diejenigen Ports 18 des Netzwerkknotens 20 abgeschaltet werden, an welche die Elektrogeräte 22 der zweiten Gerätegruppe 32b angeschlossen sind. Der dritte Fahrzeugzustand kann zum Beispiel ein Zustand sein, bei dem das Schienenfahrzeug 2 derart abgestellt wird, dass der Stromabnehmer 6 keinen Kontakt zur Fahrleitung 4 hat (sogenanntes abgerüstetes Abstellen des Schienenfahrzeugs 2).

Im Falle einer Zustandsänderung in umgekehrter Richtung - also einer Zustandsänderung vom dritten Fahrzeugzustand über den zweiten Fahrzeugzustand in den ersten Fahrzeugzustand - kann die Ein-/Abschaltvorschrift vorsehen, dass die Ports 18 des Netzwerkknotens 20 in umgekehrter Reihenfolge wieder eingeschaltet werden.

Bei einer direkten Zustandsänderung des Schienenfahrzeugs 2 vom ersten Fahrzeugzustand in den dritten Fahrzeugzustand kann die Ein-/Abschaltvorschrift vorsehen, dass diejenigen Ports 18 des Netzwerkknotens 20, an welche die Elektrogeräte 22 der ersten Gerätegruppe 32a angeschlossen sind, und diejenigen Ports 18 des Netzwerkknotens 20, an welche die Elektrogeräte 22 der zweiten Gerätegruppe 32b angeschlossen sind, gemeinsam abgeschaltet werden.

Ferner kann die Ein-/Abschaltvorschrift vorsehen, dass bei einer direkten Zustandsänderung des Schienenfahrzeugs 2 vom dritten Fahrzeugzustand in den ersten Fahrzeugzustand, diejenigen Ports 18 des Netzwerkknotens 20, an welche die Elektrogeräte 22 der ersten Gerätegruppe 32a angeschlossen sind, sowie diejenigen Ports 18 des Netzwerkknotens 20, an welche die Elektrogeräte 22 der zweiten Gerätegruppe 32b angeschlossen sind, gemeinsam eingeschaltet werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen, der durch die beigefügten Ansprüche definiert ist.

## Patentansprüche

1. Verfahren zum Betreiben eines Datennetzwerks (8) eines Schienenfahrzeugs (2), bei dem das Datennetzwerk (8) einen Netzwerkknoten (20), ein Elektrogerät (22), das an einen Port (18) des Netzwerkknotens (20) angeschlossen ist und über diesen Port (18) mit elektrischer Energie versorgbar ist, sowie eine mit dem Netzwerkknoten (20) verbundene Datenverarbeitungseinrichtung (10) zum Steuern des Netzwerkknotens (20) aufweist,
wobei von der Datenverarbeitungseinrichtung (10) gemäß einer vorgegebenen, fahrzeugzustandsabhängigen Ein-/Abschaltvorschrift ein Steuerbefehl zum Ein- oder Abschalten des Ports (18) an den Netzwerkknoten (20) übermittelt wird und vom Netzwerkknoten (20) der Port (18) gemäß dem übermittelten Steuerbefehl ein- oder abgeschaltet wird,
wobei das Datennetzwerk (8) mehrere Elektrogeräte (22) umfasst, die an unterschiedliche Ports (18) des Netzwerkknotens (20) angeschlossen sind, wobei der Steuerbefehl ein Befehl zum Ein- oder Abschalten mehrerer dieser Ports (18) ist und vom Netzwerkknoten (20) diejenigen seiner Ports (18), auf die sich der Steuerbefehl bezieht, ein- oder abgeschaltet werden,
wobei bei einer Zustandsänderung des Schienenfahrzeugs (2) von einem ersten Fahrzeugzustand in einen zweiten Fahrzeugzustand diejenigen Ports (18) des Netzwerkknotens (20), an welche die Elektrogeräte (22) einer ersten Gerätegruppe (32a) angeschlossen sind, abgeschaltet werden, wohingegen diejenigen Ports (18) des Netzwerkknotens (20), an welche die Elektrogeräte (22) einer zweiten Gerätegruppe (32b) angeschlossen sind, eingeschaltet bleiben, und
wobei bei einer Zustandsänderung des Schienenfahrzeugs (2) vom zweiten Fahrzeugzustand in einen dritten Fahrzeugzustand zusätzlich zu den bereits abgeschalteten Ports (18) des Netzwerkknotens (20), an welche die Elektrogeräte (22) der ersten Gerätegruppe (32a) angeschlossen sind, auch diejenigen Ports (18) des Netzwerkknotens (20) abgeschaltet werden, an welche die Elektrogeräte (22) der zweiten Gerätegruppe (32b) angeschlossen sind,
**dadurch gekennzeichnet, dass** von der Datenverarbeitungseinrichtung ein Diagnosesystem des Fahrzeugs bei einer von der Datenverarbeitungseinrichtung initiierten Abschaltung des Ports dahingehend beeinflusst wird, dass das Diagnosesystem keine Fehlermeldung erzeugt, die darauf beruht, dass das Elektrogerät abgeschaltet bzw. nicht erreichbar ist.

2. Verfahren nach Anspruch 1,
**dadurch gekennzeichnet, dass** ein Zustand des Schienenfahrzeugs (2) überwacht wird und dabei Fahrzeugzustandsdaten erzeugt werden, wobei der Steuerbefehl von der Datenverarbeitungseinrichtung (10) in Abhängigkeit der Fahrzeugzustandsdaten erzeugt wird.

3. Verfahren nach Anspruch 1 oder 2,
**dadurch gekennzeichnet, dass** der Steuerbefehl bei einer Zustandsänderung des Schienenfahrzeugs (2) an den Netzwerkknoten (20) übermittelt wird.

4. Verfahren nach einem der voranstehenden Ansprüche, **dadurch gekennzeichnet, dass** der Port (18) des Netzwerkknotens (20) gemäß der Ein-/Abschaltvorschrift abgeschaltet wird, wenn das Schienenfahrzeug (2) abgestellt, insbesondere abgerüstet abgestellt, wird.

5. Verfahren nach einem der voranstehenden Ansprüche, **dadurch gekennzeichnet, dass** im eingeschalteten Zustand des Ports (18) des Netzwerkknotens (20) das Elektrogerät (22) über den Port (18) mit elektrischer Energie versorgt wird und im ausgeschalteten Zustand des Ports (18) ein elektrischer Energiefluss zum Elektrogerät (22) unterbrochen ist.

6. Verfahren nach einem der voranstehenden Ansprüche, **dadurch gekennzeichnet, dass** das Elektrogerät (22) im Betrieb allein über den Port (18) des Netzwerkknotens (20) mit elektrischer Energie versorgt wird.

7. Verfahren nach einem der voranstehenden Ansprüche, **dadurch gekennzeichnet, dass** von der Datenverarbeitungseinrichtung (10) als Netzwerkprotokoll zur Steuerung des Netzwerkknotens (20) das sogenannte Simple Network Management Protocol, insbesondere Version 3 des Simple Network Management Protocols, verwendet wird.

8. Verfahren nach einem der voranstehenden Ansprüche, **dadurch gekennzeichnet, dass** nach erfolgtem Ein-/Abschalten des Ports (18) vom Netzwerkknoten (20) eine Bestätigungsmeldung über das Ein-/Abschalten des Ports (18) an die Datenverarbeitungseinrichtung (10) übermittelt wird.

9. Verfahren nach wenigstens einem der vorangegangenen Ansprüche,
**dadurch gekennzeichnet, dass** mehrere dieser Elektrogeräte (22) eine Gerätegruppe (32a, 32b) bilden und diejenigen Ports (18) des Netzwerkknotens (20), an welche die Elektrogeräte (22) dieser Gerätegruppe (32a, 32b) angeschlossen sind, gemeinsam ein-/abgeschaltet werden.

10. Schienenfahrzeug (2), aufweisend ein Datennetzwerk (8) mit einem Netzwerkknoten (20), einem Elektrogerät (22), das an einen Port (18) des Netzwerkknotens (20) angeschlossen ist und über diesen Port (18) mit elektrischer Energie versorgbar ist, sowie einer mit dem Netzwerkknoten (20) verbundenen Datenverarbeitungseinrichtung (10) zum Steuern des Netzwerkknotens (20),
wobei die Datenverarbeitungseinrichtung (10) dazu eingerichtet ist, gemäß einer vorgegebenen, fahrzeugzustandsabhängigen Ein-/Abschaltvorschrift einen Steuerbefehl zum Ein- oder Abschalten des Ports (18) an den Netzwerkknoten (20) zu übermitteln, und der Netzwerkknoten (20) dazu eingerichtet ist, gemäß dem übermittelten Steuerbefehl den Port (18) des Netzwerkknotens (20) ein- oder abzuschalten,
wobei das Datennetzwerk (8) mehrere Elektrogeräte (22) umfasst, die an unterschiedliche Ports (18) des Netzwerkknotens (20) angeschlossen sind, wobei der Steuerbefehl ein Befehl zum Ein- oder Abschalten mehrerer dieser Ports (18) ist und vom Netzwerkknoten (20) diejenigen seiner Ports (18), auf die sich der Steuerbefehl bezieht, ein- oder abgeschaltet werden, wobei bei einer Zustandsänderung des Schienenfahrzeugs (2) von einem ersten Fahrzeugzustand in einen zweiten Fahrzeugzustand diejenigen Ports (18) des Netzwerkknotens (20), an welche die Elektrogeräte (22) einer ersten Gerätegruppe (32a) angeschlossen sind, abgeschaltet werden, wohingegen diejenigen Ports (18) des Netzwerkknotens (20), an welche die Elektrogeräte (22) einer zweiten Gerätegruppe (32b) angeschlossen sind, eingeschaltet bleiben,
wobei bei einer Zustandsänderung des Schienenfahrzeugs (2) vom zweiten Fahrzeugzustand in einen dritten Fahrzeugzustand zusätzlich zu den bereits abgeschalteten Ports (18) des Netzwerkknotens (20), an welche die Elektrogeräte (22) der ersten Gerätegruppe (32a) angeschlossen sind, auch diejenigen Ports (18) des Netzwerkknotens (20) abgeschaltet werden, an welche die Elektrogeräte (22) der zweiten Gerätegruppe (32b) angeschlossen sind,
**dadurch gekennzeichnet, dass** die Datenverarbeitungseinrichtung dazu eingerichtet ist, ein Diagnosesystem des Fahrzeugs bei einer von der Datenverarbeitungseinrichtung initiierten Abschaltung des Ports dahingehend zu beeinflussen, dass das Diagnosesystem keine Fehlermeldung erzeugt, die darauf beruht, dass das Elektrogerät abgeschaltet bzw. nicht erreichbar ist.

11. Schienenfahrzeug (2) nach Anspruch 10,
**dadurch gekennzeichnet, dass** das Datennetzwerk (8) ein Ethernet-Netzwerk ist und das Elektrogerät (22) ein Power-over-Ethernet-fähiges Gerät ist.

12. Schienenfahrzeug (2) nach Anspruch 10 oder 11,
**dadurch gekennzeichnet, dass** der Netzwerkknoten (20) des Datennetzwerks (8) ein Switch, insbesondere ein Ethernet-Switch, ist.

13. Schienenfahrzeug (2) nach einem der Ansprüche 10 bis 12, **dadurch gekennzeichnet, dass** das Elektrogerät (22) ein Sensor (24) für ein Fahrgastzählsystem, eine Kamera (26) für ein Videoüberwachungssystem, ein WLAN Access Point (28) für ein Fahrgastnetzwerk oder eine Informationsausgabevorrichtung (30) für ein Fahrgastinformationssystem ist.

## Claims

1. Method for operating a data network (8) of a rail vehicle (2), in which the data network (8) has a network node (20), an electric device (22) that is connected to a port (18) of the network node (20) and can be supplied with electrical energy via said port (18), as well as a data processing facility (10) connected to the network node (20) for controlling the network node (20),
wherein a control command for switching the port (18) on or off is transmitted from the data processing facility (10) to the network node (20), according to a predefined, vehicle state-dependent switch on/off rule, and the port (18) is switched on or off by the network node (20) according to the transmitted control command,
wherein the data network (8) comprises multiple electric devices (22), which are connected to different ports (18) of the network node (20), wherein the control command is a command for switching multiple of said ports (18) on or off, and those ports (18) of the network node (20), to which the control command relates, are switched on or off by the network node (20),
wherein, on a change in state of the rail vehicle (2) from a first vehicle state to a second vehicle state, those ports (18) of the network node (20), to which the electric devices (22) of a first device group (32a) are connected, are switched off, whereas those ports (18) of the network node (20), to which the electric devices (22) of a second device group (32b) are connected, remain switched on, and
wherein, on a change in state of the rail vehicle (2) from the second vehicle state to a third vehicle state, in addition to the ports (18) that are already switched off of the network node (20), to which the electric devices (22) of the first device group (32a) are connected, those ports (18) of the network node (20), to which the electric devices (22) of the second device group (32a) are connected, are also switched off,
**characterised in that**, when the port is switched off as initiated by the data processing facility, a diagnostic system of the vehicle is influenced by the data processing facility in that the diagnostic system does not generate an error message that is based on the electric device being switched off or unreachable.

2. Method according to claim 1,
**characterised in that** a state of the rail vehicle (2) is monitored, and in doing so vehicle state data is generated, wherein the control command is generated by the data processing facility (10) as a function of the vehicle state data.

3. Method according to claim 1 or 2,
**characterised in that** the control command is transmitted to the network node (20) on a change in state of the rail vehicle (2) .

4. Method according to one of the preceding claims, **characterised in that** the port (18) of the network node (20) is switched off according to the switch on/off rule, when the rail vehicle (2) is parked, in particular parked in a disassembled manner.

5. Method according to one of the preceding claims, **characterised in that**, in the switched-on state of the port (18) of the network node (20), the electric device (22) is supplied with electrical energy via the port (18) and, in the switched-off state of the port (18), an electrical energy flow to the electric device (22) is interrupted.

6. Method according to one of the preceding claims, **characterised in that** during operation the electric device (22) is supplied with electrical energy solely via the port (18) of the network node (20).

7. Method according to one of the preceding claims, **characterised in that** what is known as the Simple Network Management Protocol, in particular version 3 of the Simple Network Management Protocol, is used by the data processing facility (10) as network protocol for controlling the network node (20).

8. Method according to one of the preceding claims, **characterised in that**, once the switching on/off of the port (18) of the network node (20) has taken place, a confirmation message regarding the port (18) being switched on/off is transmitted to the data processing facility (10).

9. Method according to at least one of the preceding claims, **characterised in that** multiple of said electric devices (22) form a device group (32a, 32b) and those ports (18) of the network node (20), to which the electric devices (22) of said device group (32a, 32b) are connected, are switched on/off together.

10. Rail vehicle (2), having a data network (8) with a network node (20), an electric device (22) that is connected to a port (18) of the network node (20) and can be supplied with electrical energy via said port (18), as well as a data processing facility (10) connected to the network node (20) for controlling the network node (20),
wherein the data processing facility (10) is configured to transmit a control command for switching the port (18) on or off to the network node (20), according to a predefined, vehicle state-dependent switch on/off rule, and the network node (20) is configured to switch the port (18) of the network node (20) on or off according to the transmitted control command,
wherein the data network (8) comprises multiple electric devices (22), which are connected to different ports (18) of the network node (20), wherein the control command is a command for switching multiple of said ports (18) on or off, and those ports (18) of the network node (20), to which the control command relates, are switched on or off by the network node (20),
wherein, on a change in state of the rail vehicle (2) from a first vehicle state to a second vehicle state, those ports (18) of the network node (20), to which the electric devices (22) of a first device group (32a) are connected, are switched off, whereas those ports (18) of the network node (20), to which the electric devices (22) of a second device group (32b) are connected, remain switched on,
wherein, on a change in state of the rail vehicle (2) from the second vehicle state to a third vehicle state, in addition to the ports (18) that are already switched off of the network node (20), to which the electric devices (22) of the first device group (32a) are connected, those ports (18) of the network node (20), to which the electric devices (22) of the second device group (32a) are connected, are also switched off,
**characterised in that** the data processing facility is configured, when the port is switched off as initiated by the data processing facility, to influence a diagnostic system of the vehicle **in that** the diagnostic system does not generate an error message that is based on the electric device being switched off or unreachable.

11. Rail vehicle (2) according to claim 10,
**characterised in that** the data network (8) is an Ethernet network and the electric device (22) is a "Power over Ethernet"-capable device.

12. Rail vehicle (2) according to claim 10 or 11, **characterised in that** the network node (20) of the data network (8) is a switch, in particular an Ethernet switch.

13. Rail vehicle (2) according to one of claims 10 to 12, **characterised in that** the electric device (22) is a sensor (24) for a passenger counting system, a camera (26) for a video monitoring system, a WLAN access point (28) for a passenger network or an information output apparatus (30) for a passenger information system.

## Revendications

1. Procédé pour faire fonctionner un réseau (8) de données d'un véhicule (2) ferroviaire, dans lequel le réseau (8) de données a un noeud (20) de réseau, un appareil (22) électrique, qui est connecté à un accès (18) du noeud (20) du réseau et qui peut être alimenté en énergie électrique par cet accès (18), ainsi que, pour la commande du noeud (20) du réseau, un dispositif (10) de traitement de données relié au noeud (20) du réseau,
dans lequel on transmet, du dispositif (10) de traitement de données au noeud (20) du réseau suivant une prescription, donnée à l'avance, de mise hors circuit / mise en circuit, qui dépend de l'état du véhicule, une instruction de commande pour mettre hors circuit ou mettre en circuit l'accès (18) et on met hors circuit ou on met en circuit, par le noeud (20) du réseau, l'accès (18) suivant l'instruction de commande transmise,
dans lequel le réseau (8) de données comprend plusieurs appareils (22) électriques, qui sont connectés à des accès (18) différents du noeud (20) du réseau, dans lequel l'instruction de commande est une instruction de mise en circuit ou de mise hors circuit de plusieurs de ces accès (18) et on met en circuit ou on met hors circuit, par le noeud (20) du réseau, ceux de ses accès (18), auxquels l'instruction de commande se rapporte,
dans lequel, lors d'une modification de l'état du véhicule (2) ferroviaire, d'un premier état du véhicule à un deuxième état du véhicule, on met hors circuit ceux des accès (18) du noeud (20) du réseau, auxquels les appareils (22) électriques d'un premier groupe (32a) d'appareils sont connectés, tandis que l'on laisse en circuit ceux des accès (18) du noeud (20) du réseau, auxquels les appareils (22) électriques d'un deuxième groupe (32b) d'appareils sont connectés, et
dans lequel, lors d'une modification de l'état du véhicule (2) ferroviaire, du deuxième état du véhicule à un troisième état du véhicule, on met hors circuit, supplémentairement aux accès (18) déjà mis hors circuit du noeud (20) du réseau, auxquels les appareils (22) électriques du premier groupe (32a) d'appareils sont connectés également ceux des accès (18) du noeud (20) du véhicule, auxquels les appareils (22) électriques du deuxième groupe (32b) d'appareils sont connectés,
**caractérisé en ce que**, par le dispositif de traitement de données, on influence un système de prévision du véhicule pour une mise hors circuit de l'accès lancée par le dispositif de traitement de données, en ce sens que le système de prévision ne produit pas de message d'erreur, qui repose sur le fait que l'appareil électrique est mis hors circuit ou ne peut pas être atteint.

2. Procédé suivant la revendication 1,
**caractérisé en ce que** l'on contrôle un état du véhicule (2) ferroviaire et on produit ainsi des données d'état du véhicule, dans lequel on produit l'instruction de commande par le dispositif (10) de traitement de données en fonction des données de l'état du véhicule.

3. Procédé suivant la revendication 1 ou 2,
**caractérisé en ce que**, lors d'une modification de l'état du véhicule (2) ferroviaire, on transmet l'instruction de commande au noeud (20) du réseau.

4. Procédé suivant l'une des revendications précédentes, **caractérisé en ce que** l'on met hors circuit, suivant une prescription de mise en circuit / mise hors circuit, l'accès (18) du noeud (20) du réseau, si le véhicule (2) ferroviaire est retiré, en particulier en étant désarmé.

5. Procédé suivant l'une des revendications précédentes, **caractérisé en ce que**, dans l'état mis en circuit de l'accès (18) du noeud (20) du réseau, on alimente l'appareil (22) électrique en énergie électrique par l'accès (18) et, dans l'état mis hors circuit de l'accès (18), un flux d'énergie électrique à l'appareil (22) électrique est interrompu.

6. Procédé suivant l'une des revendications précédentes, **caractérisé en ce que** l'on alimente en énergie électrique l'appareil (22) électrique en fonctionnement seulement par l'accès (18) du noeud (20) du réseau.

7. Procédé suivant l'une des revendications précédentes, **caractérisé en ce que** l'on utilise, par le dispositif (10) de traitement de données, comme protocole de réseau pour la commande du noeud (20) du réseau, ce que l'on appelle le protocole simple network management, en particulier la version 3 du protocole simple network management.

8. Procédé suivant l'une des revendications précédentes, **caractérisé en ce que**, après avoir effectué la mise en circuit / mise hors circuit de l'accès (18), on transmet du noeud (20) du réseau au dispositif (10) de traitement de données, un message de confirmation sur la mise en circuit / mise hors circuit de l'accès (18) .

9. Procédé suivant au moins l'une des revendications précédentes,
**caractérisé en ce que** plusieurs de ces appareils (22) électriques forment un groupe (32a, 32b) d'appareils et on met conjointement en circuit / hors circuit ceux des accès (18) du noeud (20) du réseau, auxquels les appareils (22) électriques de ce groupe (32a, 32b) d'appareils sont connectés.

10. Véhicule (2) ferroviaire, comprenant un réseau (8) de données comportant un noeud (20) de réseau, un appareil (22) électrique, qui est connecté à un accès (18) du noeud (20) du réseau et qui peut être alimenté en énergie électrique par cet accès (18), ainsi que, pour la commande du noeud (20) du réseau, un dispositif (10) de traitement de données relié au noeud (20) du réseau,
dans lequel le dispositif (10) de traitement de données est agencé pour transmettre au noeud (20) du réseau, suivant une prescription donnée à l'avance de mise en circuit / mise hors circuit, en fonction de l'état du véhicule, une instruction de commande de mise en circuit ou de mise hors circuit de l'accès (18), et le noeud (20) du réseau est agencé pour, suivant l'instruction de commande transmise, mettre en circuit ou mettre en circuit ou hors circuit l'accès (18) du noeud (20) de réseau,
dans lequel le réseau (8) de données comprend plusieurs appareils (22) électriques, qui sont connectés à des accès (18) différents du noeud (20) du réseau, dans lequel l'instruction de commande est une instruction de mise en circuit ou de mise hors circuit de plusieurs de ces accès (18) et on met en circuit ou on met hors circuit, par le noeud (20) du réseau, ceux de ses accès (18), auxquels l'instruction de commande se rapporte,
dans lequel, lors d'une modification de l'état du véhicule (2) ferroviaire, d'un premier état du véhicule à un deuxième état du véhicule, on met hors circuit ceux des accès (18) du noeud (20) du réseau, auxquels les appareils (22) électriques d'un premier groupe (32a) d'appareils sont connectés, tandis que l'on laisse en circuit ceux des accès (18) du noeud (20) du réseau, auxquels les appareils (22) électriques d'un deuxième groupe (32b) d'appareils sont connectés,
dans lequel, lors d'une modification de l'état du véhicule (2) ferroviaire, du deuxième état du véhicule à un troisième état du véhicule, supplémentairement aux accès (18) déjà mis hors circuit du noeud (20) du véhicule, auxquels les appareils (22) électriques du premier groupe (32a) d'appareils sont connectés, sont également mis hors circuit ceux des accès (18) du noeud (20) du véhicule, auxquels les appareils (22) électriques du deuxième groupe (32b) d'appareils sont connectés,
**caractérisé en ce que** le dispositif de traitement de données est agencé pour influer sur un système de prévision du véhicule, lors d'une mise hors circuit, lancée par le dispositif de traitement de données, de l'accès, en ce sens que le système de prévision ne produit pas de message d'erreur, qui repose sur le fait que l'appareil électrique est mis hors circuit ou ne peut pas être atteint.

11. Véhicule (2) ferroviaire suivant la revendication 10, **caractérisé en ce que** le réseau (8) de données est un réseau Ethernet et que l'appareil (22) électrique est un appareil apte à power over Ethernet.

12. Véhicule (2) ferroviaire suivant la revendication 10 ou 11, **caractérisé en ce que** le noeud (20) de réseau du réseau (8) de données est un switch, en particulier un switch Ethernet.

13. Véhicule (2) ferroviaire suivant l'une des revendications 10 à 12,
**caractérisé en ce que** l'appareil (22) électrique est un capteur (24) d'un système de décompte de passagers, une caméra (26) d'un système de contrôle vidéo, un point (28) d'accès WLAN pour un réseau de passagers ou un dispositif (30) d'émission d'information d'un système d'information de passagers.
